# EUROPÄISCHE PATENTANMELDUNG

(11) **EP 2 607 398 A1**
(43) Veröffentlichungstag der Anmeldung: **26.06.2013**
(21) Anmeldenummer: 11194418.7
(22) Anmeldetag: 20.12.2011
(51) Int. Cl.: C08G 18/38, C08G 18/42, C08G 18/48, C08G 63/676, C08G 63/91

(54) **Hydroxy-Aminopolymer und Verfahren zu seiner Herstellung**

(71) Anmelder: Bayer Intellectual Property GmbH, 40789 Monheim (DE)
(72) Erfinder: Hofmann, Jörg, 47800 Krefeld (DE); Lorenz, Klaus, 41539 Dormagen (DE); Nefzger, Hartmut, 50259 Pulheim (DE)
(74) Vertreter: BIP Patents

(57) **Zusammenfassung**

Die vorliegende Erfindung betrifft ein Verfahren zur Herstellung eines Hydroxy-Aminopolymers umfassend die Schritte:
a) Umsetzen einer wenigstens ein Zerewitinoff-aktives H-Atom tragenden H-funktionellen Starterverbindung mit einem ungesättigten cyclischen Carbonsäureanhydrid zu einem Carboxylgruppen tragenden Präpolymer,
b) Umsetzen des Carboxylgruppen tragenden Präpolymers mit wenigstens einer Epoxidverbindung zum Erhalt eines Hydroxylgruppen tragenden Präpolymers,
c) Addition eines primären Amins und/oder von Ammoniak an die Doppelbindung des nach Schritt b) erhaltenen Hydroxylgruppen tragenden Präpolymers zum Erhalt des Hydroxy-Aminopolymers,

wobei das Stoffmengenverhältnis zwischen dem Carbonsäureanhydrid und der Zahl der Zerewitinoff-aktiven H-Atome der H-funktionellen Starterverbindung so gewählt wird, dass weitestgehend sämtliche Zerewitinoff-aktiven H-Atome der H-funktionellen Starterverbindung umgesetzt werden. Die Erfindung betrifft zudem ein Hydroxy-Aminopolymer, das nach dem vorgenannten Verfahren erhältlich ist, wobei das Verhältnis zwischen der Stoffmenge des ungesättigten cyclischen Carbonsäureanhydrids und der Zahl der Zerewitinoff-aktiven H-Atome der H-funktionellen Starterverbindung wenigstens etwa 0,9 : 1 beträgt, sowie ferner die Verwendung dieses Hydroxy-Aminopolymers zur Herstellung eines Polyurethanharnstoffpolymers.

## Beschreibung

Die vorliegende Erfindung betrifft ein Hydroxy-Aminopolymer, ein Verfahren zu dessen Herstellung sowie die Verwendung solcher Hydroxy-Aminopolymere zur Herstellung von Polyurethanharnstoffen.

Polymere, welche sowohl aminfunktionell sind als auch Hydroxylgruppen tragen (sogenannte Hydroxy-Aminopolymere), stoßen in bestimmten Anwendungsgebieten, speziell im Bereich der Polyurethanindustrie, auf zunehmendes Interesse. Der Grund hierfür liegt darin, dass sich durch die Gegenwart zweier unterschiedlicher Typen funktioneller Gruppen, nämlich der Aminfunktionalitäten sowie der Hydroxylgruppen, neuartige Eigenschafts- und Verarbeitungsprofile erzielen lassen. So besteht beispielsweise durch die Kombination der gegenüber Isocyanatgruppen deutlich reaktiveren Aminogruppen mit den weniger reaktiven Hydroxylgruppen die Möglichkeit, den zeitlichen Verlauf von Aushärteprozessen in gewünschter Weise zu beeinflussen, was bislang bei Gegenwart nur eines Typs der vorgenannten isocyanatreaktiven funktionellen Gruppen nicht oder nur in beschränktem Maße möglich ist.

Im Allgemeinen kann die Aminofunktionalität von Hydroxy-Aminopolymeren über die Addition von primären Aminen oder Ammoniak an elektronenarme Doppelbindungen, beispielsweise vom (Meth-)Acrylattyp, in Makromoleküle eingeführt werden. Die Addition von Aminen an (meth-)acrylatgruppenhaltige Polymere, u.a. an (meth-)acrylat-gruppenhaltige Polyether, ist an sich bekannt, beispielsweise werden solche Verfahren in US 5,739,192 A1, US 5,597,390 A1, US 2005/0171002 A1, DE 196 16 984 A1, DE 195 08 308 A1, WO 2010/090345 A1, JP 2009/22753 A1 und JP 04089860 A1 erwähnt.

Demgegenüber ist der Erhalt der die elektronenarmen Doppelbindungen enthaltenden Vorläuferverbindungen im Stand der Technik entweder nicht beschrieben oder erfolgt über nach statistischen Gesetzmäßigkeiten ablaufenden Kondensationsreaktionen, beispielsweise über die Veresterung von Acrylsäure mit difunktionellen Polyethern oder die Umsetzung von Acryloylchlorid mit difunktionellen Polyethern.

Allen beschriebenen Verfahren ist gemein, dass die Einführung der Doppelbindungen in die Vorläuferverbindungen der Hydroxy-Aminopolymere auf Kosten der Zahl der Hydroxyfunktionen erfolgt. Somit erlauben diese Verfahren es nicht, die ursprüngliche Hydroxyfunktionalität, die bei Polyethermolekülen im allgemeinen durch die Funktionalität der zur Herstellung der Polyether verwendeten Startermoleküle gegeben ist, während der Einführung der Aminofunktionen zu erhalten.

In US 4,874,837 A1 ist ein Verfahren offenbart, bei dem zunächst Diethylenglykol oder eine Mischung aus Diethylenglykol und einem niedermolekularen Polyetherpolyol mit Molekulargewicht zwischen 100 und 600 g/mol mit Maleinsäureanhydrid oder einer Mischung aus Maleinsäureanhydrid und einem weiteren Anhydrid zur Reaktion gebracht werden, wobei Maleinsäureanhydrid und Diethylenglykol etwa in stöchiometrischem molarem Verhältnis eingesetzt werden. Die hierbei entstehende Säuregruppe des Halbesters wird dann durch Reaktion mit einem Epoxid in eine Hydroxygruppe zurückverwandelt, bevor abschließend durch Michael-Addition von Diethanolamin oder einer Mischung aus Diethanolamin und weiteren primäre oder sekundäre Aminogruppen enthaltenden Aminoalkoholen oder primäre oder sekundäre Aminogruppen enthaltenden Diaminen an die reaktive Doppelbindung des Hydroxymaleats die Aminogruppe eingeführt wird.

Bei dem in US 4,874,837 A1 beschriebenen Verfahren wird es zum Teil als nachteilig empfunden, dass das Verfahren strukturell auf den Einsatz von Diethylenglykol oder einer Mischung aus Diethylenglykol und einem niedermolekularen Polyetherpolyol als Vorstufe beschränkt ist. Ein möglicher Grund hierfür liegt möglicherweise in einer mit zunehmender Kettenlänge abnehmenden Reaktivität der OH-Gruppen des Polyetherpolyols in Bezug auf die hier durchgeführte Reaktion. Zudem wird jeweils nur etwa eine Hydroxygruppe dieser Vorstufe mit dem Anhydrid zur Reaktion gebracht. Ferner ist die Michael-Addition an die reaktive Doppelbindung auf Diethanolamin oder eine Mischung aus Diethanolamin und weitere mit Isocyanaten reaktive Amine beschränkt.

Die Aufgabe der vorliegenden Erfindung bestand somit darin, ein Verfahren für die Herstellung von Hydroxy-Aminopolymeren zur Verfügung zu stellen, welches universeller einsetzbar ist, wobei insbesondere auch Hydroxy-Aminopolymere aus Polyetherpolyolen größerer Kettenlänge erzeugt werden können. Zugleich soll dieses Verfahren einfach in der Durchführung sein und die Entstehung von Nebenprodukten, wie beispielsweise Umesterungsprodukten möglichst unterdrücken, so dass eine Aufarbeitung der Verfahrensprodukte in der Regel nicht notwendig ist.

Die Aufgabe wird gelöst durch ein Verfahren zur Herstellung eines Hydroxy-Aminopolymers umfassend die Schritte:
a) Umsetzen einer wenigstens ein Zerewitinoff-aktives H-Atom tragenden H-funktionellen Starterverbindung mit einem ungesättigten cyclischen Carbonsäureanhydrid zu einem Carboxylgruppen tragenden Präpolymer,
b) Umsetzen des Carboxylgruppen tragenden Präpolymers mit wenigstens einer Epoxidverbindung zum Erhalt eines Hydroxylgruppen tragenden Präpolymers,
c) Addition eines primären Amins und/oder von Ammoniak an die Doppelbindung des nach Schritt b) erhaltenen Hydroxylgruppen tragenden Präpolymers zum Erhalt des Hydroxy-Aminopolymers,
wobei das Stoffmengenverhältnis zwischen dem Carbonsäureanhydrid und der Zahl der Zerewitinoff-aktiven H-Atome der H-funktionellen Starterverbindung so gewählt wird, dass weitestgehend sämtliche Zerewitinoff-aktiven H-Atome der H-funktionellen Starterverbindung umgesetzt werden.

Überraschenderweise hat sich herausgestellt, dass durch das erfindungsgemäße Verfahren Hydroxy-Aminopolymere hergestellt werden können, die ein Verhältnis von Aminfunktionalität zu Hydroxyfunktionalität von etwa 1 1 besitzen. Zudem muss das unmittelbare Verfahrensprodukt vor der Weiterverwendung, beispielsweise zur Herstellung von Polyurethanharnstoffpolymeren, nicht zwingend aufgereinigt werden. Die Verfahrensprodukte besitzen eine hohe Reinheit, insbesondere was den Anteil der unerwünschten Umesterungsprodukte betrifft und eine vergleichsweise hohe Amin- und Hydroxygruppenzahl.

Das Verfahren kann weiterhin auch derart ausgestaltet sein, dass nach Abreaktion der vorhandenen Epoxidverbindung im Schritt b) nochmals ungesättigtes cyclisches Carbonsäureanhydrid eindosiert wird, beispielsweise etwa 1 Mol Carbonsäureanhydrid pro Mol durch die Addition der Epoxidverbindung gebildeten OH-Gruppen. Es wird dann mit anderen Worten der Verfahrensschritt a) wiederholt, wobei nunmehr die ein Zerewitinoff-aktives H-Atom tragende H-funktionelle Starterverbindung das Additionsprodukt aus ursprünglicher Starterverbindung, cyclischem ungesättigtem Carbonsäureanhydrid und Epoxidverbindung ist. Anschließend wird nochmals eine gewünschte Menge an Epoxidverbindungen addiert, also der Schritt b) wiederholt, um das Hydroxylgruppen tragende Präpolymer zu erhalten. Dieses besitzt dann etwa 2 Doppelbindungen pro Hydroxylgruppe, sodass später zwei Aminfunktionalitäten über eine Michael-Addition eingeführt werden können. Die vorgenannte Reaktion lässt sich auch zwei- oder mehrfach wiederholen, sodass eine gewünschte Zahl von Aminfunktionalitäten pro ursprünglichem Zerewitinoff-aktiven H-Atom in das Hydroxy-Aminopolymer eingebaut werden können. Dies können beispielsweise 2 oder mehr, insbesondere 3 oder mehr Aminfunktionalitäten pro ursprünglichem Zerewitinoff-aktiven H-Atom sein.

Im Rahmen der vorliegenden Erfindung ist vorgesehen, dass die H-funktionelle Starterverbindung wenigstens ein Zerewitinoff-aktives H-Atom trägt. Unter einem Zerewitinoff-aktiven H-Atom wird im Rahmen der vorliegenden Erfindung ein azides H-Atom oder "aktives" H-Atom verstanden. Ein solches kann in an sich bekannter Weise durch eine Reaktivität mit einem entsprechenden Grignard-Reagenz ermittelt werden. Die Menge an Zerewitinoff-aktiven H-Atomen wird typischerweise über die Methanfreisetzung gemessen, die bei einer Reaktion der zu überprüfenden Substanz mit Methylmagnesiumbromid (CH₃-MgBr) gemäß der folgenden Reaktionsgleichung (Formel 1) frei wird:

CH₃-MgBr + ROH → CH₄ + Mg (OR)Br (1)

Zerewitinoff-aktive H-Atome stammen typischerweise von C-H aziden organischen Gruppen, - OH, -SH, -NH₂ oder -NHR mit R als organischem Rest sowie -COOH.

Besonders geeignete H-funktionelle Starterverbindungen besitzen eine H-Funktionalität von 1 bis 35, insbesondere 1 bis 16, bevorzugt 1 bis 8, wobei sich die H-Funktionalität auf die vorgenannten Zerewitinoff-aktiven H-Atome bezieht.

Als H-funktionelle Starterverbindung sind insbesondere polyhydroxyfunktionelle Polymere geeignet, welche insbesondere ausgewählt sind aus geradkettigen und/oder verzweigten Polyethern, Polyestern, Polyetherpolyestern, Polycarbonaten, Polyetherpolycarbonaten, sowie Kombinationen hiervon.

Sofern die H-funktionelle Starterverbindung Polyether oder Polyethergruppen aufweist, enthalten diese weiter bevorzugt Ethylenoxideinheiten, wobei der Gewichtsanteil der Ethylenoxideinheiten am Polyether insbesondere wenigstens 50 Gew.% beträgt, bevorzugt wenigstens 60 Gew.%. Der Rest des Polyethergerüsts bzw. der Polyetherbausteine kann durch andere Alkylenoxideinheiten wie insbesondere (Poly)propylenoxid, (Poly)butylenoxid oder anderen (Poly)Alkylenoxidgruppen und Mischungen hiervon aufgebaut sein.

Die Molekulargewichte der H-funktionellen Starterverbindung können über weite Bereiche variieren, wobei ein mittleres Molgewicht von 200 bis 10000 g/mol bevorzugt ist, insbesondere von mehr als 600 bis 9000 g/mol, vorzugsweise von 800 bis 8000 g/mol. Das mittlere Molgewicht bezeichnet bei polymeren Verbindungen deren Zahlenmittel, welches über an sich bekannte Methoden, beispielsweise über Gelpermeationschromatographie oder die Ermittlung der OH-Zahl bestimmbar ist. Von den vorgenannten mittleren Molgewichten der H-funktionellen Starterverbindung sind insbesondere solche mit mehr als 600 g/ mol oder 800 g/mol oder mehr interessant, da diese sich bislang nach dem aus dem Stand der Technik bekannten Verfahren nicht ohne Weiteres herstellen lassen. Ein möglicher Grund hierfür kann in der mit zunehmender Kettenlänge der H-funktionellen Starterverbindung beziehungsweise des im Stand der Technik verwendeten Polyetherpolyols auftretenden Abnahme der Reaktivität der Hydroxylgruppe bei der Umsetzung mit dem Carbonsäureanhydrid gesehen werden. Mit dem erfindungsgemäßen Verfahren lassen sich hingegen auch höhermolekulare und reaktionsträgere Starterverbindungen umsetzen, insbesondere durch den Einsatz bestimmter Katalysatoren, die weiter unten noch genauer beschrieben werden.

Neben den bevorzugt zu verwendenden hydroxyfunktionellen Startern können auch aminofunktionelle Starter eingesetzt werden. Beispiele für hydroxyfunktionelle Starterverbindungen sind Methanol, Ethanol, 1-Propanol, 2-Propanol und höhere aliphatische Monole, insbesondere Fettalkohole, Phenol, alkylsubstituierte Phenole, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit, Sorbit, Saccharose, Hydrochinon, Brenzcatechin, Resorcin, Bisphenol F, Bisphenol A, 1,3,5-Trihydroxybenzol, sowie methylolgruppenhaltige Kondensate aus Formaldehyd und Phenol oder Harnstoff. Es können auch hochfunktionelle Starterverbindungen auf Basis von hydrierten Stärkehydrolyseprodukten eingesetzt werden. Solche sind beispielsweise in EP 1525244 A1 beschrieben.

Beispiele für geeignete aminogruppenhaltige H-funktionelle Starterverbindungen sind Ammoniak, Ethanolamin, Diethanolamin, Triethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans sowie bei der Kondensation von Anilin mit Formaldehyd zu Diaminodiphenylmethan anfallende höherkernige Produkte, ferner methylolgruppenhaltige Kondensate aus Formaldehyd und Melamin sowie Mannichbasen. Außerdem können als Starterverbindungen auch Ringöffnungsprodukte aus cyclischen Carbonsäureanhydriden und Polyolen eingesetzt werden. Beispiele sind Ringöffnungsprodukte aus Phthalsäureanhydrid oder Bernsteinsäureanhydrid einerseits und Ethylenglykol, Diethylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit oder Sorbit andererseits. Daneben ist es auch möglich, ein- oder mehrfunktionelle Carbonsäuren direkt als Starterverbindungen einzusetzen.

Ferner können in dem Prozess auch vorgefertigte Alkylenoxidadditionsprodukte der erwähnten Starterverbindungen, also Polyetherpolyole vorzugsweise mit OH-Zahlen von 5 bis 1000 mg KOH/g, bevorzugt 10 bis 1000 mg KOH/g, als Starterverbindungen eingesetzt, bzw. dem Reaktionsgemisch zugesetzt werden. Auch ist es möglich, im erfindungsgemäßen Prozess Polyesterpolyole vorzugsweise mit OH-Zahlen im Bereich von 6 bis 800 mg KOH/g als Starter oder Co-Starter einzusetzen. Hierfür geeignete Polyesterpolyole können beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen nach bekannten Verfahren hergestellt werden.

Des Weiteren können als H-funktionelle Startersubstanzen Polycarbonatpolyole, Polyestercarbonatpolyole oder Polyethercarbonatpolyole, bevorzugt Polycarbonatdiole, Polyestercarbonatdiole oder Polyethercarbonatdiole vorzugsweise jeweils mit OH-Zahlen im Bereich von 6 bis 800 mg KOH/g, als Starter oder Co-Starter verwendet werden. Diese werden beispielsweise durch Umsetzung von Phosgen, Dimethylcarbonat, Diethylcarbonat oder Diphenylcarbonat mit di- oder höherfunktionellen Alkoholen oder Polyesterpolyolen oder Polyetherpolyolen hergestellt.

Eingesetzt werden können auch Polyethercarbonatpolyole, wie sie beispielsweise durch katalytische Umsetzung von Alkylenoxiden (Epoxiden) und Kohlendioxid in Anwesenheit von H-funktionellen Startersubstanzen erhältlich sind (siehe z.B. EP-A 2046861). Diese Polyethercarbonatpolyole haben bevorzugt eine OH-Zahl von ≥ 5 mg KOH / g bis ≤ 140 mg KOH/g, besonders bevorzugt von ≥ 9 bis ≤ 112 mg KOH/g.

In Schritt a) des erfindungsgemäßen Verfahrens dienen bevorzugt aminogruppenfreie H-funktionelle Starterverbindungen mit Hydroxygruppen als Träger der aktiven Wasserstoffe wie beispielsweise Methanol, Ethanol, 1-Propanol, 2-Propanol und höhere aliphatische Monole, insbesondere Fettalkohole, Phenol, alkylsubstituierte Phenole, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit, Sorbit, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol und hydrierte Stärkehydrolyseprodukte. Es können auch Gemische verschiedener H-funktioneller Starterverbindungen eingesetzt werden.

Für das im Rahmen des erfindungsgemäßen Verfahrens eingesetzte ungesättigte zyklische Carbonsäureanhydrid kommen sämtliche dem Fachmann als solche bekannten Verbindungen in Frage. Dies sind beispielsweise ungesättigte zyklische Dicarbonsäureanhydride wie Maleinsäureanhydrid, Tetrahydrophthalsäureanhydrid, insbesondere 3,4,5,6-Tetrahydrophthalsäureanhydrid, sowie Kombinationen hiervon.

Als erfindungsgemäß verwendbare Epoxidverbindung können solche Vertreter ausgewählt sein, die 2 bis 24 Kohlenstoffatome aufweisen, insbesondere 2 bis 12 Kohlenstoffatome, weiter bevorzugt 2 bis 6 Kohlenstoffatome, sowie die Kombination unterschiedlicher Epoxidverbindungen der vorgenannten Art. Bei den Epoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxys ilan und 3-Glycidyloxypropyltriisopropoxysilan. Vorzugsweise werden Ethylenoxid und/oder Propylenoxid verwendet.

Bei dem erfindungsgemäßen Verfahren ist vorgesehen, dass das Stoffmengenverhältnis zwischen Carbonsäureanhydrid und der Zahl der Zerewitinoff-aktiven H-Atome der Starterverbindung so ausgewählt ist, dass weitgehend alle Zerewitinoff-aktiven H-Atome umgesetzt werden. Für diese stöchiometrische Umsetzung kann das Stoffmengenverhältnis zwischen dem Carbonsäureanhydrid und der Zahl der Zerewitinoff-aktiven H-Atome der H-funktionellen Starterverbindung etwa 0,9 : 1 bis 1,5 : 1 betragen, insbesondere 0,98 : 1 bis 1,2 : 1.

In einer Weiterbildung des erfindungsgemäßen Verfahrens wird das Stoffmengenverhältnis zwischen der Epoxidverbindung und dem Carbonsäureanhydrid auf wenigstens 1 : 1 eingestellt, vorzugsweise wenigstens auf 1,2 : 1. Auf diese Weise kann sichergestellt werden, dass sämtliche durch die Addition im Schritt a) erzeugten Säuregruppen des Carboxylgruppen tragenden Präpolymers umgesetzt werden, wobei eine endständige Hydroxylgruppe erhalten wird.

Im Rahmen des erfindungsgemäßen Verfahrens ist u.a. vorgesehen, dass ein primäres Amin oder Ammoniak an die Doppelbindung des Hydroxylgruppen-tragenden Präpolymers addiert wird. Geeignete Amine sind beispielsweise Ammoniak, aliphatische, cycloaliphatische und/oder araliphatische Monoamine mit einer primären Aminogruppe wie beispielsweise Methylamin, Ethylamin, 1-Aminopropan, 2-Aminopropan, 1-Aminobutan, 2-Aminobutan, Isobutylamin, 1-Aminopentan, 1-Aminohexan, Dodecylamin, Octadecyl-amin, Cyclohexylamin und Benzylamin; aliphatische, cycloaliphatische und/oder araliphatische Monoamine mit einer primären Aminogruppe und einer sekundären Aminogruppe, wobei die sekundäre Aminogruppe auch Teil eines Ringsystems sein kann, wie beispielsweise N-Methylethylendiamin, N-Methylpropylendiamin, N-(2-Aminoethyl)-piperazin und 3-Amino-1,2,4-triazol; aliphatische, cycloaliphatische und/ oder heterocyclische Diamine mit einer primären und einer tertiären Aminogruppe und ggf. einer sekundären Aminogruppe wie beispielsweise N,N-Dimethylethylendiamin, N,N-Dimethyl-1,3-diaminopropan, N,N-Dimethyl-1,8-diaminooctan, N,N-Dimethyl-1,4-diaminocyclohexan; und aliphatische Diamine mit zwei primären und mindestens einer sekundären Aminogruppe, wie z. B. Diethylentriamin, Triethylentetramin, Tetraethylenpentamin und Bis-(3-aminopropyl)-amin. Des Weiteren sind Amine, welche neben der primären Aminogruppe auch Hydroxygruppen enthalten, wie beispielsweise Ethanolamin oder Isopropanolamin, für das erfindungsgemäße Verfahren geeignet.

Ebenfalls geeignet sind (cyclo)aliphatische Diamine. Hierbei handelt es sich um Verbindungen mit zwei primären Aminogruppen mit der allgemeinen Formel NH₂-R-NH₂, in der R für einen aliphatischen oder cycloaliphatischen Rest mit 2 bis 21, vorzugsweise 2 bis 15 und besonders bevorzugt 2 bis 10 Kohlenstoffatomen steht. Beispielhaft zu nennen sind Ethylendiamin, 1,2- und 1,3-Propylendiamin, 1,4-Diaminobutan, 1,6-Diaminohexan, 2,2,4- und 2,4,4-Trimethyl-1,6-diaminohexan, 1,4-Diaminocyclohexan, 1,5-Diamino-2-methylpentan, 5-Amino-1-aminomethyl-1,3,3-trimethylcyclohexan (Isophorondiamin), Bis-(4-aminocyclohexyl)-methan, Bis-(4-amino-3-methylcyclohexyl)-methan, 1-Amino-1-methyl-3(4)-aminomethylcyclohexan, Bis-(4-Amino-3,5-diethylcyclohexyl)-methan, Bis-aminomethyl-hexahydro-4,7-methano-indan, 2,3-, 2,4- und 2,6-Diamino-1-methylcyclohexan bzw. Gemische dieser Diamine. Die genannten Mono- und Oligoamine können natürlich auch als Mischung eingesetzt werden.

Das molare Verhältnis von primären Aminogruppen zu additionsfähigen Doppelbindungen beträgt vorzugsweise 0,01 : 1 bis 1,1 : 1, bevorzugt 0,1 : 1 bis 1,1 : 1, besonders bevorzugt 0,5 : 1 bis 1,1 : 1 und ganz besonders bevorzugt 1 : 1 bis 1,1 : 1.

Nach einer besonders bevorzugten Ausführungsform des erfindungsgemäßen Verfahrens wird der Reaktionsmischung gleichzeitig oder vor der Umsetzung des Carboxylgruppen tragenden Präpolymers mit der Epoxidverbindung ein Katalysator zugesetzt. Hierfür kommen bevorzugt tertiäre Amine zum Einsatz. Die Menge des Katalysators, bezogen auf die Gesamtmasse des Reaktionsansatzes, kann beispielsweise ≥ 10 ppm bis ≤ 10000 ppm, bevorzugt ≥ 50 ppm bis ≤ 5000 ppm und mehr bevorzugt ≥ 100 ppm bis ≤ 2000 ppm betragen.

In einer weiteren Ausführungsform des erfindungsgemäßen Verfahrens ist der Katalysator ausgewählt aus der Gruppe umfassend:
(A1) Amine der allgemeinen Formel (2): 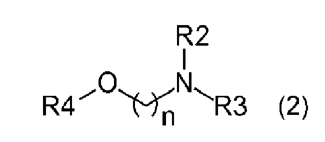 wobei gilt:
   R2 und R3 sind unabhängig voneinander Wasserstoff, Alkyl oder Aryl; oder
   R2 und R3 bilden gemeinsam mit dem sie tragenden N-Atom einen aliphatischen, ungesättigten oder aromatischen Heterozyklus;
   n ist eine ganze Zahl von 1 bis 10;
   R4 ist Wasserstoff, Alkyl oder Aryl; oder
   R4 steht für -(CH₂)ₓ-N(R41)(R42), wobei gilt:
      R41 und R42 sind unabhängig voneinander Wasserstoff, Alkyl oder Aryl; oder
      R41 und R42 bilden gemeinsam mit dem sie tragenden N-Atom einen aliphatischen, ungesättigten oder aromatischen Heterozyklus;
      x ist eine ganze Zahl von 1 bis 10;
(B1) Amine der allgemeinen Formel (3): 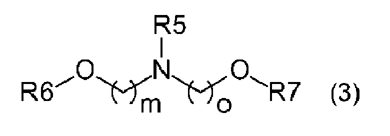 wobei gilt:
   R5 ist Wasserstoff, Alkyl oder Aryl;
   R6 und R7 sind unabhängig voneinander Wasserstoff, Alkyl oder Aryl;
   m und o sind unabhängig voneinander eine ganze Zahl von 1 bis 10;
   und/oder:
(C1) Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

Amine der allgemeinen Formel (2) können im weitesten Sinne als Aminoalkohole oder deren Ether beschrieben werden. Ist R4 Wasserstoff, so sind die Katalysatoren in eine Polyurethanmatrix einbaubar, wenn das erfindungsgemäße Hydroxy-Aminopolymer mit einem Polyisocyanat umgesetzt wird. Dieses ist vorteilhaft, um das Austreten des Katalysators, der im Falle von Aminen mit nachteiligen Geruchsproblemen einhergehen kann, an die Polyurethanoberfläche, die sogenannte "fogging"- oder VOC (volatile organic compounds)-Problematik, zu verhindern.

Amine der allgemeinen Formel (3) können im weitesten Sinne als Amino(bis)alkohole oder deren Ether beschrieben werden. Sind R6 oder R7 Wasserstoff, so sind diese Katalysatoren ebenfalls in eine Polyurethanmatrix einbaubar.

Vorzugsweise gilt hierbei, dass in dem Amin der allgemeinen Formel (2) R2 und R3 Methyl sind, R4 Wasserstoff ist und n = 2 ist oder aber R2 und R3 Methyl sind, R4 -(CH₂)₂-N(CH₃)₂ ist und n = 2 ist. Insgesamt ergibt sich also entweder N,N-Dimethylethanolamin oder Bis(2-(dimethylamino)ethyl)ether.

Weiterhin ist bevorzugt, dass in dem Amin der allgemeinen Formel (3) R5 Methyl ist, R6 und R7 Wasserstoff sind, m = 2 ist und o = 2 ist. Insgesamt ergibt sich also N-Methyldiethanolamin.

In einer weiteren Ausführungsform des erfindungsgemäßen Verfahrens findet die Reaktion mit dem Epoxid bei einer Temperatur von ≥ 70 °C bis ≤ 150 °C statt. Die Reaktionstemperatur kann vorzugsweise ≥ 80 °C bis ≤ 130 °C betragen.

Besonders bevorzugte Katalysatoren sind Diazabicyclooctan, N-Methyldiethanolamin, Dimethylethanola m in, Bis (2-(dimethylamino)ethyl)ether, Diazabicyclo[5.4.0]undec-7-en, Dialkylbenzylamin, Dimethylpiperazin, 2,2'-Dimorpholinyldiethylether und Pyridin oder Kombinationen hiervon.

Das erfindungsgemäße Verfahren ist zwar nicht auf den Einsatz der vorgenannten Katalysatoren beschränkt, jedoch hat sich herausgestellt, dass bestimmte Amine einen nachteiligen Einfluss auf die Reinheit des Reaktionsprodukts haben können. Dies kann sich dadurch äußern, dass es teilweise zu einer Auflösung der Esterbindungen der ungesättigten Carbonsäure, also einer Verseifung kommen kann, oder zu unerwünschten Umesterungsreaktionen. Die Nebenprodukte lassen sich zum Teil schwer entfernen beziehungsweise verschlechtern die Homogenität des Reaktionsprodukts wenn sie nicht entfernt werden oder entfernt werden können. Aus diesem Grund sollte der Katalysator nicht Imidazol oder N-Methylimidazol sein, da diese Katalysatoren zu den vorgenannten unerwünschten Nebenreaktionen führen können. Mit anderen Worten sollten diese Verbindungen während des gesamten Reaktionsverlaufs nicht mit den Edukten oder (Zwischen)Produkten in Kontakt gebracht werden.

Was den Zugabezeitpunkt des Katalysators betrifft, so ist es von Vorteil, wenn der Katalysator gleichzeitig oder vor der Zugabe des ungesättigten cyclischen Carbonsäureanhydrids zugegeben wird.

Die vorliegende Erfindung betrifft ferner ein Hydroxy-Aminopolymer, das nach einem erfindungsgemäßen Verfahren erhältlich ist, wobei das Verhältnis zwischen der Stoffmenge des ungesättigten cyclischen Carbonsäureanhydrids und der Zahl der Zerewitinoff-aktiven H-Atome der H-funktionellen Starterverbindung wenigstens etwa 0,9 : 1 beträgt, vorzugsweise wenigstens 0,98 : 1.

Das erfindungsgemäße Hydroxy-Aminopolymer kann zudem dadurch gekennzeichnet sein, dass die H-funktionelle Starterverbindung ein Zahlenmittel von mehr als 600 g/ mol aufweist, insbesondere von mehr als 600 bis 9000 g/mol aufweist, vorzugsweise von 800 bis 8000 g/mol. Hierdurch werden höhermolekulare Hydroxy-Aminopolymere zur Verfügung gestellt, die einen nahezu gleich großen Anteil an Hydroxyl- und Aminfunktionalitäten aufweisen, wobei das Verhältnis beispielsweise bei 1,2 : 1 bis 1 : 1,2 liegt, insbesondere bei 1,1 : 1 bis 1 : 1,1, bevorzugt bei 1,05 : 1 bis 1 : 1,05.

Ein Vorteil solcher höhermolekularer Hydroxy-Aminopolymere liegt darin, dass bei der Umsetzung solcher Hydroxy-Aminopolymere mit Polyisocyanaten zu Polyurethan(harnstoff)polymeren schneller ein höheres Molekulargewicht erzielt werden kann, das heißt, das Polymer gewinnt während der Aushärtung schneller an Festigkeit.

Die vorliegende Erfindung ist zudem auf ein Polyurethanharnstoffpolymer gerichtet, welches durch Umsetzung eines Polyisocyanats mit einem Hydroxy-Aminopolymer nach einem erfindungsgemäßen Verfahren erhältlich ist. Hierzu können die nach dem erfindungsgemäßen Verfahren erhältlichen Hydroxy-Aminopolymere alleine oder gegebenenfalls im Gemisch mit weiteren isocyanatreaktiven Komponenten mit organischen Polyisocyanaten, gegebenenfalls in Gegenwart von Treibmitteln, Katalysatoren und gegebenenfalls weiteren Zusatzstoffen wie z.B. Zellstabilisatoren zur Reaktion gebracht werden und so als Komponenten von massiven oder geschäumten Polyurethanharnstoffen dienen. Folglich sind Polyurethanharnstoffe, bevorzugt massive oder geschäumte Polyurethanharnstoffe, insbesondere Beschichtungssysteme enthaltend die erfindungsgemäßen Hydroxy-Aminopolymere ebenfalls Gegenstand der Erfindung.

Geeignete Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel (4)

Q(NCO)n , (4)

in der
n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP 0 007 502 A1,Seiten 7 - 8, beschrieben werden. Bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Es können auch Urethangruppen-haltige Polyisocyanate (Prepolymere) eingesetzt werden, die beispielsweise Reaktionsprodukte der Polyisocyanate mit Polyricinolsäureesterpolyolen oder beliebigen anderen Polyolen sind. Vorzugsweise wird als Polyisocyanat mindestens eine Verbindung ausgewählt aus der Gruppe bestehend aus 2,4- und 2,6-Toluylendiisocyanat, 4,4'-und 2,4'- und 2,2'-Diphenylmethandiisocyanat und Polyphenylpolymethylenpolyisocyanat ("Mehrkern-MDl") eingesetzt, besonders bevorzugt wird als Polyisocyanat eine Mischung enthaltend 4,4'-Diphenylmethandiisocyanat und 2,4'-Diphenylmethandiisocyanat und Polyphenylpolymethylenpolyisocyanat eingesetzt.

Neben den vorgenannten Polyisocyanaten können für die Herstellung der Polyurethan(harnstoff)polymere zusätzlich noch konventionelle Polyetherpolyole verwendet werden. Unter konventionellen Polyetherpolyolen im Sinne der Erfindung werden Verbindungen bezeichnet, die Alkylenoxidadditionsprodukte von Starterverbindungen mit Zerewitinoff-aktiven Wasserstoffatomen, also Polyetherpolyole mit einer Hydroxylzahl gemäß DIN 53240 von ≥ 15 mg KOH/g bis ≤80 mg KOH/g, vorzugweise von ≥ 20 mg KOH/g bis ≤60 mg KOH/g sind. Beispiele für solche Polyole sind dem Fachmann bekannt. Sie können eine Hydroxylzahl gemäß DIN 53240 von ≥ 15 mg KOH/g bis ≤ 80 mg KOH/g, vorzugweise von ≥ 20 mg KOH/g bis ≤60 mg KOH/g aufweisen. Für die konventionellen Polyetherpolyole eingesetzte Starterverbindungen mit Zerewitinoff-aktiven Wasserstoffatomen weisen meist Funktionalitäten von 2 bis 6, bevorzugt von 3 bis 6 auf. Vorzugsweise sind die Starterverbindungen hydroxyfunktionell. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol und methylolgruppenhaltige Kondensate aus Formaldehyd und Phenol.

Geeignete Alkylenoxide für die konventionellen Polyetherpolyole sind beispielsweise Ethylenoxid, Propylenoxid, 1,2-Butylenoxid bzw. 2,3-Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

Schließlich ist die vorliegende Erfindung auf die Verwendung eines erfindungsgemäßen Hydroxy-Aminopolymers zur Herstellung eines Polyurethanharnstoffpolymers gerichtet.

Die vorliegende Erfindung wird im Folgenden anhand von Ausführungsbeispielen näher erörtert.

### Mess- und Bestimmungsmethoden:

### OH-Zahl und Viskosität

Die Bestimmung der OH-Zahlen erfolgte gemäß der Vorschrift der DIN 53240. Die Bestimmung der Säure-Zahlen erfolgte gemäß der Vorschrift der DIN EN ISO 2114. Die Bestimmung der Amin-Zahlen erfolgte gemäß der Vorschrift der DIN 53176. Die Viskositäten wurden mittels Rotationsviskosimeter (Physica MCR 51, Hersteller: Anton Paar) nach der Vorschrift der DIN 53018 ermittelt (Spindeltyp CC27, Scherratenbereich 16 - 128 s⁻¹).

### Beispiel 1 (erfindungsgemäß):

In einem 1 1 Laborautoklaven wurden unter Stickstoffatmosphäre 505 g (0,514 mol) eines bifunktionellen Poly(oxypropylen)polyols mit OH-Zahl = 114 mg KOH/g (Molekulargewicht 983 g/mol) vorgelegt und dann auf 125°C aufgeheizt. Bei dieser Temperatur wurden 110,8 g (1,129 mol) Maleinsäureanhydrid und 0,616 g Diazabicyclooctan zugegeben und anschließend 60 Minuten bei 125°C gerührt. Danach wurden bei 125°C innerhalb von 30 Minuten 119,7 g (2,06 mol) Propylenoxid in den Autoklaven dosiert und anschließend 3 h bei dieser Temperatur nachreagiert. Dann wurde die Temperatur auf 60°C abgesenkt, eine Zwischenprobe gezogen und diese analysiert:
OH-Zahl = 87,0 mg KOH/g
Säurezahl = 0,23 mg KOH/g

Zum restlichen Ansatz wurden dann bei 60°C 114,2 g (1,13 mol) 1-Aminohexan gegeben. Nach einer Reaktionszeit von 3 h bei 60°C wurden leicht flüchtige Bestandteile bei 100°C für 60 Minuten im Vakuum ausgeheizt und der Reaktionsansatz dann auf Raumtemperatur abgekühlt.

Man erhielt ein Produkt mit folgenden analytischen Werten:
OH-Zahl = 154,2 mg KOH/g
Amin-Zahl = 74 mg KOH/g
Viskosität (25°C) = 976 mPas.

### Vergleichsbeispiel 1 (Magnesiumhydroxid als Katalysator gemäß US 4,874,837):

In einem 1 1 Laborautoklaven wurden unter Stickstoffatmosphäre 505 g (0,514 mol) eines bifunktionellen Poly(oxypropylen)polyols mit OH-Zahl = 114 mg KOH/g (Molekulargewicht 983 g/mol) vorgelegt und dann auf 125°C aufgeheizt. Bei dieser Temperatur wurden 110,8 g (1,129 mol) Maleinsäureanhydrid und 0,616 g Magnesiumhydroxid zugegeben und anschließend 60 Minuten bei 125°C gerührt. Danach wurden bei 125°C innerhalb von 30 Minuten 119,7 g (2,06 mol) Propylenoxid in den Autoklaven dosiert und anschließend 3 h bei dieser Temperatur nachreagiert. Dann wurde die Temperatur auf 60°C abgesenkt, eine Zwischenprobe gezogen und diese analysiert:
OH-Zahl = 82,1 mg KOH/g
Säurezahl = 0,66 mg KOH/g

Zum restlichen Ansatz wurden dann bei 60°C 114,2 g (1,13 mol) 1-Aminohexan gegeben. Nach einer Reaktionszeit von 3 h bei 60°C wurden leicht flüchtige Bestandteile bei 100°C für 60 Minuten im Vakuum ausgeheizt und der Reaktionsansatz dann auf Raumtemperatur abgekühlt.

Man erhielt ein Produkt mit folgenden analytischen Werten:
OH-Zahl = 150,8 mg KOH/g
Amin-Zahl = 71,5 mg KOH/g
Viskosität (25°C) = 1215 mPas.

Dieses Ergebnis zeigt im Vergleich zum erfindungsgemäßen Beispiel 1, dass die Viskosität deutlich über derjenigen des erfindungsgemäßen Produkts liegt. Gleichzeitig liegen die OH-Zahl und auch die Amin-Zahl im Vergleichsbeispiel unterhalb der Werte des erfindungsgemäßen Produkts. Das heißt die Zahl an Funktionalitäten pro Masseneinheit liegt bei dem erfindungsgemäßen Produkt höher.

### Vergleichsbeispiel 2 (ohne Katalysator):

In einem 1 1 Laborautoklaven wurden unter Stickstoffatmosphäre 505 g (0,514 mol) eines bifunktionellen Poly(oxypropylen)polyols mit OH-Zahl = 114 mg KOH/g (Molekulargewicht 983 g/mol) vorgelegt und dann auf 125°C aufgeheizt. Bei dieser Temperatur wurden 110,8 g (1,129 mol) Maleinsäureanhydrid zugegeben und anschließend 60 Minuten bei 125°C gerührt. Danach wurden bei 125°C innerhalb von 30 Minuten 119,7 g (2,06 mol) Propylenoxid in den Autoklaven dosiert und anschließend 3 h bei dieser Temperatur nachreagiert. Dann wurde die Temperatur auf 60°C abgesenkt, eine Zwischenprobe gezogen und diese analysiert:
OH-Zahl = 59,1 mg KOH/g
Säurezahl = 35,2 mg KOH/g

Wegen des unzureichenden Umsatzes der Säuregruppen mit Propylenoxid ohne Zusatz von Katalysator wurde der Versuch abgebrochen.

### Beispiel 2 (erfindungsgemäß):

In einem 1 1 Laborautoklaven wurden unter Stickstoffatmosphäre 650 g (0,146 mol) eines trifunktionellen, Glycerin-gestarteten Polyetherpolyols mit einem Ethylenoxid/Propylenoxid-Verhältnis von 73/27 (w/w) und OH-Zahl = 37,9 mg KOH/g (Molekulargewicht 4440 g/mol) vorgelegt und dann auf 60°C aufgeheizt. Bei dieser Temperatur wurden 41,8 g (0,426 mol) Maleinsäureanhydrid und 0,734 g N-Methyldiethanolamin zugegeben und anschließend 60 Minuten bei 60°C gerührt. Danach wurde auf 90°C aufgeheizt und bei dieser Temperatur innerhalb von 30 Minuten 77,4 g (1,76 mol) Ethylenoxid in den Autoklaven dosiert und anschließend 2,5 h bei dieser Temperatur nachreagiert. Dann wurde die Temperatur auf 60°C abgesenkt, eine Zwischenprobe gezogen und diese analysiert:
OH-Zahl = 29,2 mg KOH/g
Säurezahl = 0,04 mg KOH/g

Zum restlichen Ansatz wurden dann bei 60°C 32,0 g (0,438 mol) 1-Aminobutan gegeben. Nach einer Reaktionszeit von 3 h bei 60°C wurden leicht flüchtige Bestandteile bei 100°C für 60 Minuten im Vakuum ausgeheizt und der Reaktionsansatz dann auf Raumtemperatur abgekühlt.

Man erhielt ein Produkt mit folgenden analytischen Werten:
OH-Zahl = 64,4 mg KOH/g
Amin-Zahl = 30,0 mg KOH/g
Viskosität (25°C) = 2880 mPas.

### Vergleichsbeispiel 3 (Magnesiumhydroxid als Katalysator gemäß US 4,874,837):

In einem 1 1 Laborautoklaven wurden unter Stickstoffatmosphäre 650 g (0,146 mol) eines trifunktionellen, Glycerin-gestarteten Polyetherpolyols mit einem Ethylenoxid/Propylenoxid-Verhältnis von 73/27 (w/w) und OH-Zahl = 37,9 mg KOH/g (Molekulargewicht 4440 g/mol) vorgelegt und dann auf 60°C aufgeheizt. Bei dieser Temperatur wurden 41,8 g (0,426 mol) Maleinsäureanhydrid und 0,734 g Magnesiumhydroxid zugegeben und anschließend 60 Minuten bei 60°C gerührt. Danach wurde auf 90°C aufgeheizt und bei dieser Temperatur innerhalb von 30 Minuten 77,4 g (1,76 mol) Ethylenoxid in den Autoklaven dosiert und anschließend 2,5 h bei dieser Temperatur nachreagiert. Dann wurde die Temperatur auf 60°C abgesenkt, eine Zwischenprobe gezogen und diese analysiert:
OH-Zahl = 21,5 mg KOH/g
Säurezahl = 15,6 mg KOH/g

Wegen des unzureichenden Umsatzes der Säuregruppen mit Ethylenoxid mit Magnesiumhydroxid als Katalysator wurde der Versuch abgebrochen. Hieraus ist zu erkennen, dass erst das erfindungsgemäße Verfahren die Umsetzung höhermolekularer Starterverbindungen erlaubt, die sich mit dem aus der US 4,874,837 beschriebenen Verfahren nicht umsetzen lassen.

### Vergleichsbeispiel 4 (ohne Katalysator):

In einem 1 1 Laborautoklaven wurden unter Stickstoffatmosphäre 650 g (0,146 mol) eines trifunktionellen, Glycerin-gestarteten Polyetherpolyols mit einem Ethylenoxid/Propylenoxid-Verhältnis von 73/27 (w/w) und OH-Zahl = 37,9 mg KOH/g (Molekulargewicht 4440 g/mol) vorgelegt und dann auf 60°C aufgeheizt. Bei dieser Temperatur wurden 41,8 g (0,426 mol) Maleinsäureanhydrid zugegeben und anschließend 60 Minuten bei 60°C gerührt. Danach wurde auf 90°C aufgeheizt und bei dieser Temperatur innerhalb von 30 Minuten 77,4 g (1,76 mol) Ethylenoxid in den Autoklaven dosiert und anschließend 2,5 h bei dieser Temperatur nachreagiert.

Dabei erfolgte kein Umsatz mit Ethylenoxid, so dass der Versuch abgebrochen wurde.

### Beispiel 3 (erfindungsgemäß):

In einem 1 1 Laborautoklaven wurden unter Stickstoffatmosphäre 505 g (0,514 mol) eines bifunktionellen Poly(oxypropylen)polyols mit OH-Zahl = 114 mg KOH/g (Molekulargewicht 983 g/mol) vorgelegt und dann auf 125°C aufgeheizt. Bei dieser Temperatur wurden 110,8 g (1,129 mol) Maleinsäureanhydrid und 1,23 g Diazabicyclooctan zugegeben und anschließend 60 Minuten bei 125°C gerührt. Danach wurden bei 125°C innerhalb von 60 Minuten 122,7 g (2,11 mol) Propylenoxid in den Autoklaven dosiert und anschließend 3 h bei dieser Temperatur nachreagiert. Dann wurde die Temperatur auf 60°C abgesenkt und bei dieser Temperatur 115,3 g (1,13 mol) N,N-Dimethyl-1,3-diaminopropan zugegeben. Nach einer Reaktionszeit von 3 h bei 60°C wurden leicht flüchtige Bestandteile bei 100°C für 60 Minuten im Vakuum ausgeheizt und der Reaktionsansatz dann auf Raumtemperatur abgekühlt.

Man erhielt ein Produkt mit einer OH-Zahl von 166 mg KOH/g, einer Amin-Zahl von 161 mg KOH/g und einer Viskosität (25°C) von 1355 mPas.

### Beispiel 4 (erfindungsgemäß):

In einem 11 Laborautoklaven wurden unter Stickstoffatmosphäre 350 g (0,35 mol) eines bifunktionellen Poly(oxypropylen)polyols mit OH-Zahl = 112 mg KOH/g (Molekulargewicht 1000 g/mol) vorgelegt und dann auf 125°C aufgeheizt. Bei dieser Temperatur wurden 71,9 g (0,73 mol) Maleinsäureanhydrid und 0,48 g Diazabicyclooctan zugegeben und anschließend 60 Minuten bei 125°C gerührt. Danach wurden bei 125°C innerhalb von 30 Minuten 61,6 g (1,4 mol) Ethylenoxid in den Autoklaven dosiert und anschließend 3 h bei dieser Temperatur nachreagiert. Dann wurde die Temperatur auf 60°C abgesenkt und bei dieser Temperatur 74,2 g (0,73 mol) 1-Aminohexan zugegeben. Nach einer Reaktionszeit von 1 h bei 60°C wurden leicht flüchtige Bestandteile bei 100°C für 60 Minuten im Vakuum ausgeheizt und der Reaktionsansatz dann auf Raumtemperatur abgekühlt.

Man erhielt ein Produkt mit einer OH-Zahl von 156 mg KOH/g, einer Amin-Zahl von 71 mg KOH/g und einer Viskosität (25°C) von 991 mPas.

### Beispiel 5 (erfindungsgemäß):

In einem 1 1 Laborautoklaven wurden unter Stickstoffatmosphäre 350 g (0,35 mol) eines bifunktionellen Poly(oxypropylen)polyols mit OH-Zahl = 112 mg KOH/g (Molekulargewicht 1000 g/mol) vorgelegt und dann auf 125°C aufgeheizt. Bei dieser Temperatur wurden 71,9 g (0,73 mol) Maleinsäureanhydrid und 0,48 g Diazabicyclooctan zugegeben und anschließend 60 Minuten bei 125°C gerührt. Danach wurden bei 125°C innerhalb von 30 Minuten 61,6 g (1,4 mol) Ethylenoxid in den Autoklaven dosiert und anschließend 3 h bei dieser Temperatur nachreagiert. Dann wurde die Temperatur auf 60°C abgesenkt und bei dieser Temperatur 75,0 g (0,73 mol) N,N-Dimethyl-1,3-diaminopropan zugegeben. Nach einer Reaktionszeit von 1 h bei 60°C wurden leicht flüchtige Bestandteile bei 100°C für 60 Minuten im Vakuum ausgeheizt und der Reaktionsansatz dann auf Raumtemperatur abgekühlt.

Man erhielt ein Produkt mit einer OH-Zahl von 162 mg KOH/g, einer Amin-Zahl von 146 mg KOH/g und einer Viskosität (25°C) von 1535 mPas.

### Beispiel 6 (erfindungsgemäß):

In einem 1 1 Laborautoklaven wurden unter Stickstoffatmosphäre 350 g (0,72 mol) eines bifunktionellen Polyesters auf Basis von Diethylenglykol und Phthalsäureanhydrid mit OH-Zahl = 230 mg KOH/g (Molekulargewicht 488 g/mol) vorgelegt und dann auf 125°C aufgeheizt. Bei dieser Temperatur wurden 147,7 g (1,51 mol) Maleinsäureanhydrid und 0,67 g Diazabicyclooctan zugegeben und anschließend 60 Minuten bei 125°C gerührt. Danach wurden bei 125°C innerhalb von 60 Minuten 166,7 g (2,87 mol) Propylenoxid in den Autoklaven dosiert und anschließend 3 h bei dieser Temperatur nachreagiert. Dann wurde die Temperatur auf 60°C abgesenkt und bei dieser Temperatur 154 g (1,51 mol) N,N-Dimethyl-1,3-diaminopropan zugegeben. Nach einer Reaktionszeit von 1 h bei 60°C wurden leicht flüchtige Bestandteile bei 100°C für 60 Minuten im Vakuum ausgeheizt und der Reaktionsansatz dann auf Raumtemperatur abgekühlt.

Man erhielt ein Produkt mit einer OH-Zahl von 212 mg KOH/g, einer Amin-Zahl von 183 mg KOH/g und einer Viskosität (25°C) von 68550 mPas.

### Beispiel 7 (erfindungsgemäß):

In einem 1 1 Laborautoklaven wurden unter Stickstoffatmosphäre 350 g (0,72 mol) eines bifunktionellen Polyesters auf Basis von Diethylenglykol und Phthalsäureanhydrid mit OH-Zahl = 230 mg KOH/g (Molekulargewicht 488 g/mol) vorgelegt und dann auf 125°C aufgeheizt. Bei dieser Temperatur wurden 147,7 g (1,51 mol) Maleinsäureanhydrid und 0,62 g Diazabicyclooctan zugegeben und anschließend 60 Minuten bei 125°C gerührt. Danach wurden bei 125°C innerhalb von 60 Minuten 126,4 g (2,87 mol) Ethylenoxid in den Autoklaven dosiert und anschließend 3 h bei dieser Temperatur nachreagiert. Dann wurde die Temperatur auf 60°C abgesenkt und bei dieser Temperatur 154 g (1,51 mol) N,N-Dimethyl-1,3-diaminopropan zugegeben. Nach einer Reaktionszeit von 1 h bei 60°C wurden leicht flüchtige Bestandteile bei 100°C für 60 Minuten im Vakuum ausgeheizt und der Reaktionsansatz dann auf Raumtemperatur abgekühlt.

Man erhielt ein Produkt mit einer OH-Zahl von 245 mg KOH/g, einer Amin-Zahl von 219 mg KOH/g und einer Viskosität (25°C) von 17350 mPas.

### Beispiel 8 (erfindungsgemäß):

In einem 1 1 Laborautoklaven wurden unter Stickstoffatmosphäre 500 g (0,113 mol) eines trifunktionellen, Glycerin-gestarteten Polyetherpolyols mit einem Ethylenoxid/Propylenoxid-Verhältnis von 73/27 (w/w) und OH-Zahl = 37,9 mg KOH/g (Molekulargewicht 4440 g/mol) vorgelegt und dann auf 125°C aufgeheizt. Bei dieser Temperatur wurden 34,8 g (0,355 mol) Maleinsäureanhydrid und 0,53 g Diazabicyclooctan zugegeben und anschließend 60 Minuten bei 125°C gerührt. Danach wurden bei 125°C innerhalb von 30 Minuten 29,8 g (0,677 mol) Ethylenoxid in den Autoklaven dosiert und anschließend 3 h bei dieser Temperatur nachreagiert. Dann wurde die Temperatur auf 60°C abgesenkt und bei dieser Temperatur 35,9 g (0,355 mol) 1-Aminohexan zugegeben. Nach einer Reaktionszeit von 1 h bei 60°C wurden leicht flüchtige Bestandteile bei 100°C für 60 Minuten im Vakuum ausgeheizt und der Reaktionsansatz dann auf Raumtemperatur abgekühlt.

Man erhielt ein Produkt mit einer OH-Zahl von 67,4 mg KOH/g, einer Amin-Zahl von 31,0 mg KOH/g und einer Viskosität (25°C) von 3840 mPas.

Diese Ergebnisse belegen, dass das erfindungsgemäße Verfahren nicht denselben Limitierungen unterliegt wie das aus US 4,874,837 bekannte Verfahren. So lassen sich erfindungsgemäß auch Starterverbindungen mit Molekülmassen deutlich oberhalb von 600 g/mol einsetzen, was bei dem vorbekannten Verfahren nicht zum Erfolg führt. Zudem liefert das erfindungsgemäße Verfahren, insbesondere aufgrund des Einsatzes der speziellen tertiären Aminkatalysatoren auch Produkte mit verbesserten Eigenschaften. So werden im Vergleich zu US 4,874,837 bei identischen Ausgangssubstanzen niedrigerviskose Produkte bei gleichzeitig höherer OH- und Aminfunktionalität erhalten, was diese Verbindungen in besonderer Weise für den Einsatz bei der Herstellung von Polyurethanharnstoffpolymeren geeignet erscheinen lässt.

## Patentansprüche

1. Verfahren zur Herstellung eines Hydroxy-Aminopolymers umfassend die Schritte:
a) Umsetzen einer wenigstens ein Zerewitinoff-aktives H-Atom tragenden H-funktionellen Starterverbindung mit einem ungesättigten cyclischen Carbonsäureanhydrid zu einem Carboxylgruppen tragenden Präpolymer,
b) Umsetzen des Carboxylgruppen tragenden Präpolymers mit wenigstens einer Epoxidverbindung zum Erhalt eines Hydroxylgruppen tragenden Präpolymers,
c) Addition eines primären Amins und/oder von Ammoniak an die Doppelbindung des nach Schritt b) erhaltenen Hydroxylgruppen tragenden Präpolymers zum Erhalt des Hydroxy-Aminopolymers,
wobei das Stoffmengenverhältnis zwischen dem Carbonsäureanhydrid und der Zahl der Zerewitinoff-aktiven H-Atome der H-funktionellen Starterverbindung so gewählt wird, dass weitestgehend sämtliche Zerewitinoff-aktiven H-Atome der H-funktionellen Starterverbindung umgesetzt werden.

2. Verfahren nach Anspruch 1, **dadurch gekennzeichnet, dass** die H-funktionelle Starterverbindung 1 bis 35 Zerewitinoff-aktive H-Atome aufweist, insbesondere 1 bis 8.

3. Verfahren nach Anspruch 1 oder 2, **dadurch gekennzeichnet, dass** die H-funktionelle Starterverbindung ein polyhydroxyfunktionelles Polymer ist, welches insbesondere ausgewählt ist aus geradkettigen und/oder verzweigten Polyethern, Polyestern, Polyetherpolyestern, Polycarbonaten, Polyetherpolycarbonaten, sowie Kombinationen hiervon.

4. Verfahren nach Anspruch 3, **dadurch gekennzeichnet, dass** der Polyether, der Polyetherpolyester und/oder das Polyetherpolycarbonat Ethylenoxideinheiten aufweist, wobei der Gewichtsanteil der Ethylenoxideinheiten am Polyether wenigstens 50 Gew.-% beträgt, insbesondere wenigstens 60 Gew.-%.

5. Verfahren nach einem der vorstehenden Ansprüche, **dadurch gekennzeichnet, dass** die H-funktionelle Starterverbindung ein mittleres Molgewicht von 200 bis 10000 g/mol aufweist, insbesondere von mehr als 600 bis 9000 g/mol, vorzugsweise von 800 bis 8000 g/mol.

6. Verfahren nach einem der vorstehenden Ansprüche, **dadurch gekennzeichnet, dass** das ungesättigte cyclische Carbonsäureanhydrid ausgewählt ist aus ungesättigten cyclischen Dicarbonsäureanhydriden, wie Maleinsäureanhydrid, Tetrahydrophthalsäureanhydrid insbesondere3,4,5,6-Tetrahydrophthalsäureanhydrid, sowie Kombinationen hiervon.

7. Verfahren nach einem der vorstehenden Ansprüche, **dadurch gekennzeichnet, dass** die Epoxidverbindung ausgewählt ist solchen mit 2 bis 24 Kohlenstoffatomen, insbesondere aus Ethylenoxid und/ oder Propylenoxid.

8. Verfahren nach einem der vorstehenden Ansprüche, **dadurch gekennzeichnet, dass** das Verhältnis zwischen der Stoffmenge des ungesättigten cyclischen Carbonsäureanhydrids und der Zahl der Zerewitinoff-aktiven H-Atome der H-funktionellen Starterverbindung wenigstens 0,9 : 1 bis 1,5 : 1 beträgt, insbesondere 0,98 : 1 bis 1,2 : 1.

9. Verfahren nach einem der vorstehenden Ansprüche, **dadurch gekennzeichnet, dass** das primäre Amin ausgewählt ist aus aliphatischen, cycloaliphatischen und/oder araliphatischen Mono- oder Diaminen mit wenigstens einer primären Aminogruppe.

10. Verfahren nach einem der vorstehenden Ansprüche, **dadurch gekennzeichnet, dass** der Reaktionsmischung gleichzeitig oder vor der Umsetzung des Carboxylgruppen tragenden Präpolymers mit der Epoxidverbindung ein Katalysator zugesetzt wird, wobei der Katalysator insbesondere ausgewählt ist aus tertiären Aminen, vorzugsweise Diazabicyclooctan, N-Methyldiethanolamin, Dimethylethanolamin, Bis(2-(dimethylamino)ethyl)ether, Diazabicyclo[5.4.0]undec-7-en, Dialkylbenzylamin, Dimethylpiperazin, 2,2'-Dimorpholinyldiethylether und Pyridin oder Kombinationen hiervon.

11. Hydroxy-Aminopolymer, erhältlich nach einem Verfahren gemäß einem der Ansprüche 1 bis 10, wobei das Verhältnis zwischen der Stoffmenge des ungesättigten cyclischen Carbonsäureanhydrids und der Zahl der Zerewitinoff-aktiven H-Atome der H-funktionellen Starterverbindung wenigstens etwa 0,9 : 1 beträgt, vorzugsweise wenigstens 0,98 : 1.

12. Hydroxy-Aminopolymer nach Anspruch 11, **dadurch gekennzeichnet, dass** die H-funktionelle Starterverbindung ein Zahlenmittel von mehr als 600 g/ mol aufweist, insbesondere von mehr als 600 bis 9000 g/mol aufweist, vorzugsweise von 800 bis 8000 g/mol.

13. Hydroxy-Aminopolymer nach Anspruch 11 oder 12, **dadurch gekennzeichnet, dass** das Verhältnis von Hydroxyl- zu Aminfunktionalitäten bei 1,2 : 1 bis 1 : 1,2 liegt, insbesondere bei 1,1 : 1 bis 1 : 1,1, bevorzugt bei 1,05 : 1 bis 1 : 1,05.

14. Polyurethanharnstoffpolymer, erhältlich durch Umsetzung eines Polyisocyanats mit einem Hydroxy-Aminopolymer nach einem der Ansprüche 11 bis 13.

15. Verwendung eines Hydroxy-Aminopolymers nach einem der Ansprüche 11 bis 13 zur Herstellung eines Polyurethanharnstoffpolymers.
